# EUROPEAN PATENT APPLICATION

(11) **EP 4 815 395 A1**
(43) Date of publication of application: **30.09.2026**
(21) Application number: 25165908.2
(22) Date of filing: 25.03.2025
(51) Int. Cl.: H04L 43/50, H04L 12/40

(54) **A CAN XL TRANSCEIVER AND A METHOD**

(71) Applicant: NXP B.V., 5656 AG Eindhoven (NL)
(72) Inventor: Wagner, Martin, 5656 AG Eindhoven (NL)
(74) Representative: Schmütz, Christian Klaus Johannes

(57) **Abstract**

A CAN XL transceiver configured to operate in a slow mode at a first bit rate and in a fast mode at a second bit rate higher than the first bit rate, the CAN XL transceiver comprising: a CAN bus connection for coupling the CAN XL transceiver to a CAN bus of a CAN XL network; a TXD pin for receiving transmission instructions from a controller associated with the CAN XL transceiver; and a network diagnosis module configured to: receive a CAN XL message from the CAN bus via the CAN bus connection; receive a pulse width modulation, PWM, signal from the TXD pin for indicating fast mode operation of the CAN XL transceiver; identify a test message in a data portion of the CAN XL message using the PWM signal; perform one or more test procedures on the CAN bus based on the test message; and output measurement results from the one or more test procedures.

## Description

### Field

The present disclosure relates to a CAN XL transceiver and a method for detecting failures in a CAN XL network.

### Summary

According to a first aspect of the present disclosure there is provided a CAN XL transceiver configured to operate in a slow mode at a first bit rate and in a fast mode at a second bit rate higher than the first bit rate, the CAN XL transceiver comprising:
a CAN bus connection for coupling the CAN XL transceiver to a CAN bus of a CAN XL network;
a TXD pin for receiving transmission instructions from a controller associated with the CAN XL transceiver; and
a network diagnosis module configured to:
   receive a CAN XL message from the CAN bus via the CAN bus connection;
   receive a pulse width modulation, PWM, signal from the TXD pin for indicating fast mode operation of the CAN XL transceiver;
   identify a test message in a data portion of the CAN XL message using the PWM signal;
   perform one or more test procedures on the CAN bus based on the test message; and
   output measurement results from the one or more test procedures.

In one or more embodiments, the network diagnosis module may be configured to:
derive a clock signal from the PWM signal; and
identify the test message in the data portion of the CAN XL message using the clock signal.

In one or more embodiments, the network diagnosis module may be configured to identify the test message by:
comparing an identification sub-portion of the CAN XL message to a predefined test message identifier using the PWM signal or a clock signal derived from the PWM signal; and
identifying the CAN XL message as a test message if the identifier sub-portion matches the predefined test message identifier.

In one or more embodiments, the network diagnosis module may be configured to:
identify one or more test sequences in the data portion of the CAN XL message using the PWM signal or a clock signal derived from the PWM signal; and
perform the one or more test procedures in accordance with the one or more test sequences.

In one or more embodiments, the CAN XL transceiver may be configured to identify the one or more test sequences in response to identifying the CAN XL message as a test message.

In one or more embodiments, each test sequence may comprise a different test pattern for performing a test procedure on the CAN bus at a respective frequency.

In one or more embodiments, the network diagnosis module may be configured to, for each test sequence:
inject an inverted signal on the CAN bus, wherein the inverted signal has an opposite polarity to the test sequence; and
increase a level of the inverted signal until a resulting signal level on the CAN bus reduces below a threshold value.

In one or more embodiments, the CAN-XL transceiver may comprise an out of bounds receiver for detecting the fast mode, wherein the network diagnosis module is configured to receive a signal from the out of bounds receiver when the signal level on the CAN bus reduces below the threshold value.

In one or more embodiments, the diagnosis control module may be configured to determine a measurement result for each test sequence as the level of the inverted signal that results in the signal level on the CAN bus reducing below the threshold value.

In one or more embodiments, the presence of the PWM signal at the TXD pin indicates that the CAN XL transceiver is operating in the fast mode, wherein the network diagnosis module is configured to:
reset during an idle state of the CAN XL transceiver; and
activate in response to receipt of the PWM signal at the TXD pin.

In one or more embodiments, the diagnosis control module may be configured to output the measurement results by inserting bits corresponding to the measurement results in an RXD signal relaying the CAN XL message, wherein the bits are inserted in an empty space at the end of the CAN XL message.

In one or more embodiments, the diagnosis control module may be configured to update the cyclic redundancy check field of the CAN XL message based on the inserted bits.

In one or more embodiments, the CAN XL transceiver may be configured to:
transmit a test message request to one or more nodes on the CAN XL network; and
receive the CAN XL message from one of the one or more nodes in response to the test message request.

According to a second aspect of the present disclosure there is provided a CAN XL network node comprising any CAN XL transceiver disclosed herein.

According to a third aspect of the present disclosure there is provided a method for detecting failures in a CAN XL network, the method comprising:
receiving, at a CAN XL transceiver, a CAN XL message from a CAN bus of a CAN XL network;
receiving a pulse width modulation, PWM, signal from a TXD pin of the CAN XL transceiver for indicating fast mode operation of the CAN XL transceiver;
identifying a test message in a data portion of the CAN XL message using the PWM signal;
performing one or more test procedures on the CAN bus based on the test message; and
outputting measurement results from the one or more test procedures.

In one or more embodiments, the method may comprise:
comparing an identification sub-portion of the CAN XL message to a predefined test message identifier; and
identifying the CAN XL message as a test message if the identifier sub-portion matches the predefined test message identifier.

In one or more embodiments, the method may comprise:
identifying one or more test sequences in the data portion of the CAN XL message; and
performing the one or more test procedures in accordance with the one or more test sequences.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of CAN XL transceiver according to an embodiment of the present disclosure;
Figure 2 illustrates a method detecting failures in a CAN XL network; and
Figure 3 illustrates an example predefined CAN XL test message.

### Detailed Description

Detecting physical failures in communication networks, such as in the wiring harness, is an important feature for detecting so called "hidden" failures. These are failures that do not necessarily interrupt the communication but might cause temporary disturbances due to bad signal integrity. Such failures are extremely difficult to detect and even more difficult to localize.

Conventional approaches include transceivers for controller area network (CAN) networks with integrated diagnosis. These diagnosis techniques allow detecting short-circuits on the bus, but they are not able to detect interruptions, especially not bad contact resistances resulting from corrosion effects.

A so-called "Fingerprint" technique can detect bad contacts but requires complex software for implementation within a standard CAN network. It is also not possible to run the fingerprint diagnosis within normal communications because the measurements are modifying the bus signals, which would result in a disturbed communication.

The disturbed communication problem can be circumvented by running the diagnosis tests only within the payload of a specific test message. This technique requires a reliable detection of the test message, to ensure that no normal messages are disturbed, and a detection of the test pattern within the payload for running the (disturbing) tests in real time while the message is transmitted on the bus. Such a solution requires implementing a custom protocol engine within the CAN transceiver containing the diagnosis hardware. The custom protocol engine is responsible for detecting the test message and conducting the measurement. The configuration of this node and the report of the measurement results are performed via an additional interface like SPI (serial peripheral interface).

The custom protocol engine requires a clock that is accurate enough for decoding the bit pattern. With increasing data rates this becomes more difficult to realize unless an external reference clock is used like a crystal oscillator. However, providing such a reference clock is typically too much effort and too expensive for a CAN transceiver. Therefore, the custom protocol engine solution is unsuitable for bus communication networks with high data rates, like the latest development in CAN networks, the CAN XL system, which allows data rates of up to 20 Mbit/s.

Another difficulty for failure detection in high bandwidth communication is that a failure might only be visible within a certain bandwidth. This means that the diagnosis for high-speed networks should cover different frequency ranges.

### CAN XL

CAN XL provides several new features in contrast to the known classic CAN and CAN FD systems. Like CAN FD the bit rate in CAN XL is not constant but switches to a higher data rate in the data phase or data portion of a CAN XL message (in contrast to a slower data rate in the arbitration phase or arbitration portion of a CAN XL message). In addition, the physical network in CAN XL can switch to another scheme for driving the bus wires, the so-called fast mode, during the data phase when a data rate of more than 8 Mbit/s is necessary. The fast mode is further distinguished with a fast transmit and fast receive mode. In a CAN XL transceiver, the protocol engine provides a pulse width modulation (PWM) signal via the TXD pin to instruct the transceiver to transmit or receive data in the fast mode. The PWM signal is applied for the whole time that the CAN XL transceiver is operating in fast mode. In fast transmit mode the CAN XL transceiver additionally uses the PWM signal to code the information of the data pattern for transmission on the CAN bus. During the arbitration phase, the CAN XL transceiver operates in a "slow mode" with a lower bit rate than the "fast mode".

The physical characteristics of CAN XL operating in the fast mode significantly differs from those of classic CAN and CAN FD. Firstly, in the fast mode, the data is no longer coded as recessive and dominant bits. Instead, data is coded as L0 (level 0) and L1 (level 1) bits which are generated by a push-pull driver of a transmitter module of the CAN XL transceiver. The L0 and L1 result in a symmetrical differential bus signal at all times during the fast mode. As a result, a different receiver threshold is used in the fast mode which is placed at a differential voltage of 0 V. To identify a fast phase signal when the CAN XL transceiver is operating in the slow mode (when conventional dominant and recessive bits are used), another receiver, the so called out-of-bound (OOB) detector is available in each CAN XL transceiver, which uses an asymmetric differential threshold at typically -350 mV. If the CAN transceiver missed the switch to the fast mode, the out-of-bounds receiver enables detection of ongoing CAN traffic and avoid a false detection of an idle state. An out-of-bound receiver is a standard component of a CANXL transceiver.

Another novelty in CAN XL is the protocol. Different to classic CAN and CAN FD the message identification is no longer in the arbitration phase (slow mode in CAN XL). For CAN XL, the arbitration portion of a message (processed in the slow mode) only contains message priority information and some basic flags to identify the protocol. The remaining identification information is coded within the data portion, including some new data fields. The new data fields contain e.g. a "Service Data Unit Type" (SDT), a "Preface CRC" (PCRC), for safeguarding a part of the message header, and a much wider data / payload field that can contain up 2048 bytes.

Therefore, CAN XL transceivers are not well suited to the custom protocol engine approach to failure detection because of the requirement for a highly accurate external clock to detect a test message identifier which will be in the data portion of a CAN XL message instead of the arbitration portion (as in CAN FD).

The present disclosure provides a CAN XL transceiver and method for performing network failure testing and diagnosis in a CAN XL network that does not require a high accuracy external reference clock or a custom protocol engine in the CAN transceiver.

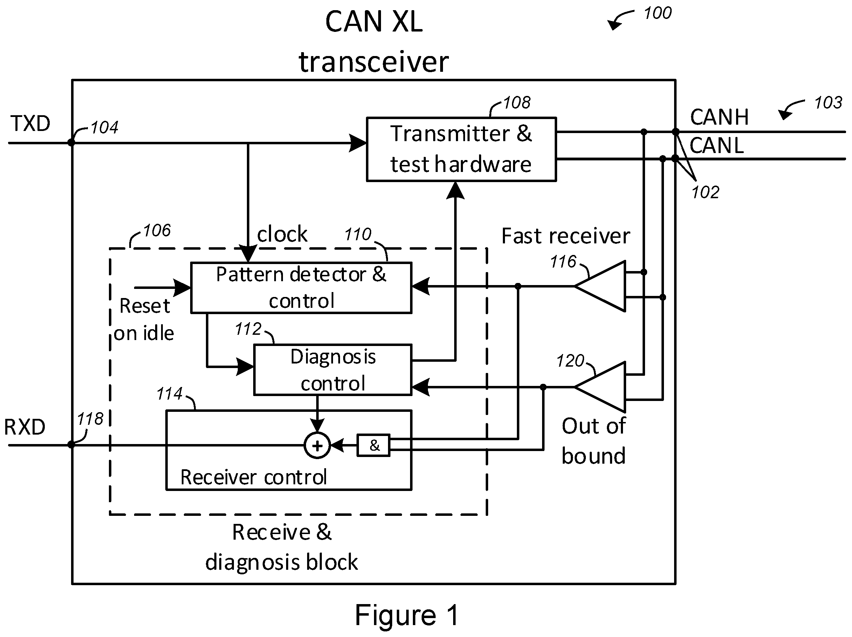

Figure 1 illustrates a CAN XL transceiver 100 according to an embodiment of the present disclosure. CAN XL transceivers are known in the art and the figure only illustrates parts of the CAN XL transceiver 100 that are relevant to the present disclosure.

As described above, the CAN XL transceiver 100 is configured to operate in a slow mode at a first bit rate (i.e. in the arbitration phase when processing an arbitration portion of a CAN XL message) and in a fast mode at a second bit rate higher than the first bit rate (i.e. in the data phase when processing a data portion of a CAN XL message).

The CAN XL transceiver 100 comprises: a CAN bus connection 102 for coupling to the CAN bus 103 of a CAN XL network; a TXD pin 104 for receiving transmission instructions from a host controller and CAN controller (not shown) associated with the CAN XL transceiver 100; and a network diagnosis module 106. The network diagnosis module 106 is configured to receive a CAN XL message from the CAN bus 103 via the CAN bus connection 102. The network diagnosis module 106 is also configured to receive a PWM signal from the TXD pin 104 for indicating that the CAN XL transceiver 100 is operating in the fast mode. The network diagnosis module 106 is configured to identify a test message in the data portion of the CAN XL message using the PWM signal. The network diagnosis module 106 is configured to perform (or instruct a transmitter module 108 to perform) one or more test procedures on the CAN bus 103 according to the test message. The network diagnosis module 106 outputs test results from the one or more test procedures.

The network diagnosis module 106 provides network diagnosis functionality to the CAN XL transceiver 100. One or more nodes on a CAN XL network may include a CAN XL transceiver 100 comprising a network diagnosis module 106.

In some examples, the CAN XL transceiver 100 may define a particular diagnosis node on the CAN XL network or may be integrated in a central node of the network.

To switch the CAN XL transceiver 100 to the fast mode, the PWM signal is provided at the TXD pin 104 by the protocol engine (in the CAN controller). This is a standard CAN XL transceiver function and not described in detail here.

The network diagnosis module 106 can receive the PWM signal and extract a clock signal from the PWM signal. In this way, the network diagnosis module has access to a sufficiently accurate clock for decoding the bit pattern of the data portion of the CAN XL message in the fast mode. The network diagnosis module 106 can identify and decode the test message in the fast mode using the clock signal.

In this example, the network diagnosis module 106 comprises: a pattern detection module 110; a diagnosis control module 112; and a receiver control module 114. The pattern detection module 110 can identify and decode the test message in the CAN XL message using the PWM/clock signal. The diagnosis control module 112 can control the one or more test procedures on the CAN bus 103 and determine the test results. The receiver control module 114 can amend one or more data fields of the CAN XL message to include the test results as a way of outputting the test results. In some examples, the functionality of the three modules 110, 112, 114 may be combined or divided into any arrangement, and the network diagnosis module 106 can be considered to perform any function of the sub modules 110, 112, 114 described herein.

In this example, the CAN XL transceiver 100 includes a transmitter module 108. The transmitter module 108 is configured to transmit signals to the CAN bus 103 via the CAN bus connection 102. The transmitter module 108 may include a push pull driver for asserting L0 and L1 bits on the CAN bus in the fast mode. The transmitter module 108 may include a standard bit driver for asserting dominant and recessive bits on the CAN bus 103. The transmitter module 108 can receive transmission instructions from the CAN controller via the TXD pin. In this example, the transmitter module 108 can also receive transmission instructions from the network diagnosis module 106.

In this example, the CAN XL transceiver 100 further comprises a fast receiver 116 for receiving CAN XL messages from the CAN bus via the CAN bus connection 102. The fast receiver 116 operates during the fast mode with a differential threshold of approximately 0V (the threshold may not be exactly 0V to avoid errors). The fast receiver 116 outputs the CAN XL messages from the CAN bus to the network diagnosis module 106 and ultimately to the RXD pin 118 for processing by the associated CAN controller (not shown).

In this example, the CAN XL transceiver 100 also comprises an out-of-bounds detector 120. As described above, the out of bounds detector 120 can comprise an asymmetric threshold, e.g. -350 mV, to detect the data portion of the CAN XL message, particularly if the transceiver missed th switch to the fast mode. The out-of-bounds receiver 120 may output a signal to the RXD pin 118 for the protocol engine to detect ongoing communication on the CAN bus.

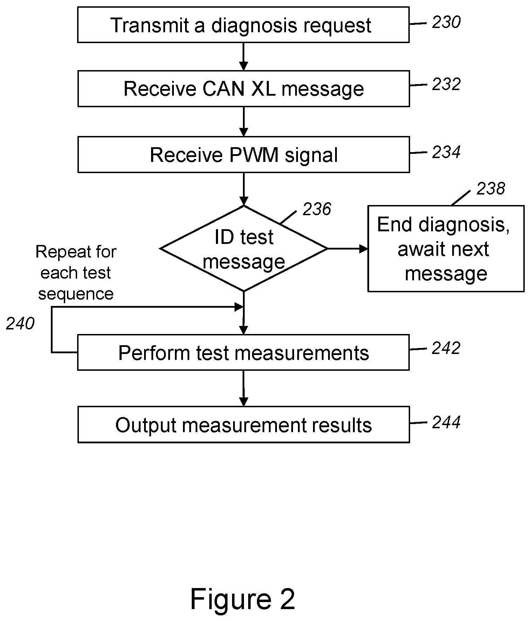

Further detail and operation of the CAN XL transceiver 100 will now be described with reference to Figure 2 which illustrates an example process for performing a diagnostic test on a CAN XL network.

At a first step 230, the CAN XL mode containing the diagnosis hardware, may transmit via its CAN XL transceiver 100 a request (via the transmitter module 108, connection 102 and CAN bus 103) to one or more nodes on the CAN XL network. The first step is optional. In some examples, the nodes may be programmed to periodically send a CAN XL test message to the CAN XL transceiver 100.

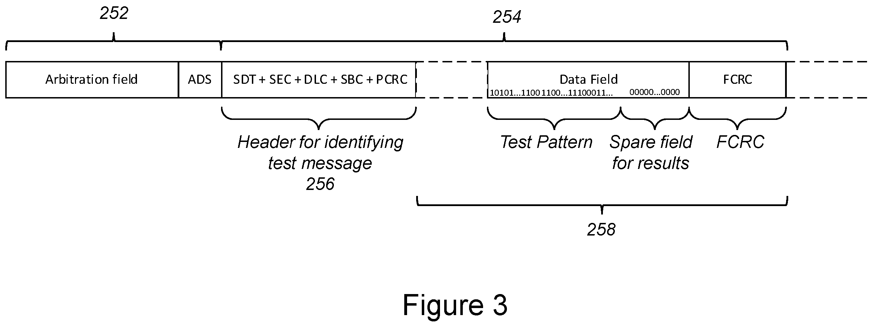

At second step 232, the CAN XL transceiver 100 receives a CAN XL message. The CAN XL transceiver 100 may receive a predefined CAN XL test message from each of the one or more nodes on the CAN XL network. The predefined CAN XL test messages may be received sequentially from each of the one more nodes. The sequence order may be determined using the arbitration portion of the CAN XL messages. The second to seventh steps are described with respect to one CAN XL test message received from a single CAN XL node (e.g. the first node in the sequence order). Following the seventh step, the second to seventh steps can be repeated for each of the other nodes according to the sequence order. An example predefined test message is illustrated in Figure 3 and described below. At the beginning of the new message, the transceiver 100 has not determined whether the message is a test message. Therefore, at the transceiver 100 may forward all data to the RXD pin 118 (via receiver control module 114) as usual.

At a third step 234, the network diagnosis module 106 receives the PWM signal from the TXD pin 104. Providing the PWM signal is standard known CAN XL functionality. The PWM signal indicates that the transceiver 100 has switched to the fast mode meaning that the bits of the CAN message have changed from dominant/recessive to L0/L1. As part of the third step 234, the network diagnosis module 106 may also derive a clock signal from the PWM signal. The pattern detection module 110 can receive the PWM or clock signal. In some examples, the pattern detection module 110 may be reset during an idle phase of the CAN XL transmitter 100, and may activate in response to first receipt of the PWM/clock signal which indicates the start of the fast mode and data portion of the CAN XL message.

At a fourth step 236, the network diagnosis module 106, in the fast mode, identifies a test message in a data portion of the predefined CAN XL test message using the PWM/clock signal. The pattern detection module 110 may scan an identifier sub-portion of the of the data portion of the CAN XL message to identify a test message identifier. In some examples, the pattern detection module 110 may: compare the identifier sub-portion to a predefined test message identifier; and identify the message as a test message if the identifier sub-portion matches the predefined test message identifier. The identifier sub-portion typically comprises the first 36 bits of the data portion of the CAN XL message, up to the end of the PCRC field. The identifier sub-portion may be referred to as an identification signature for the CAN XL message.

In terms of hardware, the pattern detection module 110 may comprise a shift register that is reset at the beginning of the fast mode. The shift register may be controlled by the PWM / clock signal enabling identification of the test message in the identifier sub-portion.

If the pattern detection module 110 does not identify a test message, the process may proceed to a fifth step 238. During the fifth step, the transceiver 100 may continue to forward the CAN XL message to the RXD pin 118 without any additional processing, like a standard CAN XL communication. The diagnosis module may await the next message. For example, the diagnosis control module 112 may not be activated, and the receiver control module 114 may forward the CAN XL message to the RXD pin 118. The process may return to the second step 232 to receive the next CAN XL message.

If during the fourth step, a test message is identified, the method may proceed to the sixth step 242. The network diagnosis module 106 performs a test measurement on the CAN bus 103 according to the test message.

The test message may include one or more test sequences. The data field containing the test sequences typically begins 40 bits after the last bit of the PCRC field. The pattern and detection module 110 can identify the start of the one or more test sequences by counting PWM/clock cycles. The one or more test sequences may comprise a plurality of different test sequences of a test pattern. Each sequence may be suited to measure the line impedance of the CAN bus at a particular frequency range. For example, a first sequence may start with "1010101..." (frequency f), followed by a sequence "110011001100" (frequency f/2), then "111000111000..." (frequency f/3) and so forth. In some examples, the one or more sequences may define test patterns for running measurements with inverted signals of increasing driver strength, as explained below.

To perform the test measurement on the CAN bus, the pattern control module may output a test sequence to the diagnosis control module 112. In response, the diagnosis control module may control the transmitter module 108 to inject signals on the CAN bus 103 according to the test sequence. In some examples, the diagnosis control module 112 may control the transmitter module 108 to inject an inverted signal (i.e. a signal of opposite polarity to the test sequence that is present on the CAN bus 103) on the CAN bus 103. For example, if the test sequence is "101010..", the inverted signal "010101.." may be injected on the CAN bus 103. The diagnosis control module 112 can increase the driver strength of the inverted signal (e.g. in a step-wise manner) until the resulting signal level (original signal + inverted signal) on the CAN bus 103 falls below the threshold of the out-of-bounds receiver 120. The diagnosis control module 112 can receive a signal from the out-of-bounds receiver 120 and record the driver strength at which the signal on the CAN bus 103 no longer trips the out-of-bounds receiver 120. The measured step (or measured drive strength) represents the impedance of the CAN bus 103 between the CAN XL transceiver 100 and the node which sent the test message, for the frequency range covered by the data pattern of the test sequence. The diagnosis control module 112 can then release the CAN bus 103 and repeat the test procedure for each remaining test sequence received from the pattern detection module 110. The remaining nodes on the CAN XL network will not notice the test procedures, because, as mentioned above, their fast receiver threshold is located at a differential voltage of 0V. Thus, the reception is not affected by the reduction of the amplitude. Other examples may use a different test procedure, such as a fingerprint method wherein the network diagnosis module 106 can comprise additional hardware for adjusting a tunable impedance coupled to the CAN bus 103.

At a seventh step 244, the network diagnosis module 106 outputs measurement results from the one or more test procedures. The network diagnosis module may output the measurement results to the host controller associated with the CAN XL transceiver 100. In some examples, the network diagnosis module 106 may output the results via a dedicated interface like SPI. In some examples, the network diagnosis module 106 may output the measurement results by inserting or writing them into empty fields of the CAN XL test message. For example, the predefined CAN XL test message received from each node of the network may have intentional empty space (spare part) at the end of the data field (which can be up to 2048 bytes in CAN XL). The receiver control module 114 may replace the empty space at the end of the data field with the measurement results received from the diagnosis control module 112. The receiver control block 114 may update the CRC (cyclic redundancy check) of the frame accordingly. The receiver control block 114 may determine the CRC code of the newly inserted bits and merge this additional CRC code with the data of the original CRC field. It is not essential to calculate the CRC value of the entire amended message. The amended test message is provided to the RXD pin 108. This allows the host controller to directly receive the measurement results at the end of the test message, without the necessity of having an extra interface.

All of the second to seventh steps 232-244 of Figure 2 can be completed within the single frame of the CAN XL test message. The second to seventh step 232-244 may be repeated for every node on the CAN XL network (using the associated received CAN XL test message form each node) to provide a complete overview of impedance on the network and identify if there is a failure, such as a bad contact resistance.

Figure 3 illustrates an example CAN XL test message 250 that may be received by the CAN XL transceiver 100 from another node on the network (at second step 322).

The CAN XL test message 250 includes the arbitration portion 252 and the data portion 254. The data portion 254 includes the identification sub-portion 256 and the payload sub-portion 258. The network diagnosis module can process the identification sub-portion 256 using the PWM/clock signal to identify the message as a test message (rather than a standard communication message). The payload sub-portion 258 includes all the test sequences / test patterns for testing impedance of the CAN bus at different frequencies. The diagnosis control module 106 performs test measurements on the CAN bus 103 according to these test sequences, as described above. The payload sub-portion 258 also includes a spare field comprising zeros for inserting the measurement results. The diagnosis control module 106 can insert the measurement results in the spare field for easy communication to the host controller. The diagnosis control module 106 can also update the CRC field to account for the newly inserted bits of the measurement results.

The disclosed systems and methods provide a diagnosis concept for CAN XL, specifically for the high-speed "fast" mode, by using the PWM input as clock reference, identifying a test message by scanning the beginning of the data portion of the CAN XL message, driving tests with inverse signal of increasing strength to measure the impedance of the communication channel at different frequencies and reporting the results via pin RXD by inserting the measurement data in a spare part of the message.

The disclosed systems and methods can be used in any CAN XL network, making use of the fast mode, particularly automotive CAN XL networks. The systems and methods can be also used to update an existing CAN XL network with diagnosis capability, because the functionality described here is only required in one node / transceiver of the CAN XL network.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A CAN XL transceiver configured to operate in a slow mode at a first bit rate and in a fast mode at a second bit rate higher than the first bit rate, the CAN XL transceiver comprising:
a CAN bus connection for coupling the CAN XL transceiver to a CAN bus of a CAN XL network;
a TXD pin for receiving transmission instructions from a controller associated with the CAN XL transceiver; and
a network diagnosis module configured to:
receive a CAN XL message from the CAN bus via the CAN bus connection;
receive a pulse width modulation, PWM, signal from the TXD pin for indicating fast mode operation of the CAN XL transceiver;
identify a test message in a data portion of the CAN XL message using the PWM signal;
perform one or more test procedures on the CAN bus based on the test message; and
output measurement results from the one or more test procedures.

2. The CAN XL transceiver of claim 1, wherein the network diagnosis module is configured to:
derive a clock signal from the PWM signal; and
identify the test message in the data portion of the CAN XL message using the clock signal.

3. The CAN XL transceiver of claim 1 or claim 2, wherein the network diagnosis module is configured to identify the test message by:
comparing an identification sub-portion of the CAN XL message to a predefined test message identifier using the PWM signal or a clock signal derived from the PWM signal; and
identifying the CAN XL message as a test message if the identifier sub-portion matches the predefined test message identifier.

4. The CAN XL transceiver of any preceding claim, wherein the network diagnosis module is configured to:
identify one or more test sequences in the data portion of the CAN XL message using the PWM signal or a clock signal derived from the PWM signal; and
perform the one or more test procedures in accordance with the one or more test sequences.

5. The CAN XL transceiver of claim 4, wherein each test sequence comprises a different test pattern for performing a test procedure on the CAN bus at a respective frequency.

6. The CAN XL transceiver of claim 4 or claim 5, wherein the network diagnosis module is configured to, for each test sequence:
inject an inverted signal on the CAN bus, wherein the inverted signal has an opposite polarity to the test sequence; and
increase a level of the inverted signal until a resulting signal level on the CAN bus reduces below a threshold value.

7. The CAN XL transceiver of claim 6, wherein the CAN-XL transceiver comprises an out of bounds receiver for detecting the fast mode, wherein the network diagnosis module is configured to receive a signal from the out of bounds receiver when the signal level on the CAN bus reduces below the threshold value.

8. The CAN XL transceiver of claim 6 or claim 7, wherein the diagnosis control module is configured to determine a measurement result for each test sequence as the level of the inverted signal that results in the signal level on the CAN bus reducing below the threshold value.

9. The CAN XL transceiver of any preceding claim, wherein the presence of the PWM signal at the TXD pin indicates that the CAN XL transceiver is operating in the fast mode, wherein the network diagnosis module is configured to:
reset during an idle state of the CAN XL transceiver; and
activate in response to receipt of the PWM signal at the TXD pin.

10. The CAN XL transceiver of any preceding claim, wherein the diagnosis control module is configured to output the measurement results by inserting bits corresponding to the measurement results in an RXD signal relaying the CAN XL message, wherein the bits are inserted in an empty space at the end of the CAN XL message.

11. The CAN XL transceiver of claim 9, wherein the diagnosis control module is configured to update the cyclic redundancy check field of the CAN XL message based on the inserted bits.

12. The CAN XL transceiver of any preceding claim, wherein the CAN XL transceiver is configured to:
transmit a test message request to one or more nodes on the CAN XL network; and
receive the CAN XL message from one of the one or more nodes in response to the test message request.

13. A method for detecting failures in a CAN XL network, the method comprising:
receiving, at a CAN XL transceiver, a CAN XL message from a CAN bus of a CAN XL network;
receiving a pulse width modulation, PWM, signal from a TXD pin of the CAN XL transceiver for indicating fast mode operation of the CAN XL transceiver;
identifying a test message in a data portion of the CAN XL message using the PWM signal;
performing one or more test procedures on the CAN bus based on the test message; and
outputting measurement results from the one or more test procedures.

14. The method of claim 13 comprising:
comparing an identification sub-portion of the CAN XL message to a predefined test message identifier; and
identifying the CAN XL message as a test message if the identifier sub-portion matches the predefined test message identifier.

15. The method of claim 14 or claim 15 comprising:
identifying one or more test sequences in the data portion of the CAN XL message; and
performing the one or more test procedures in accordance with the one or more test sequences.
